# FASCICULE DE BREVET EUROPEEN

(11) **EP 4 481 295 B1**
(45) Date de publication et mention de la délivrance du brevet: **14.01.2026**
(21) Numéro de dépôt: 24181725.3
(22) Date de dépôt: 12.06.2024
(51) Int. Cl.: F24H 9/06, F24H 9/02, F24D 3/08, F24H 1/50, F24H 4/04, F24H 9/14, F16M 11/04, F16M 13/02

(54) **DISPOSITIF COMBINÉ AVEC BRAS DE FIXATION ET MODULE HYDRAULIQUE AGENCÉ DE MANIÈRE OPTIMISÉE**
KOMBINIERTE VORRICHTUNG MIT BEFESTIGUNGSARM UND OPTIMIERTEM HYDRAULIKMODUL
COMBINATION DEVICE WITH FASTENING ARM AND HYDRAULIC MODULE WITH OPTIMISED ARRANGEMENT

(30) Priorité: 20.06.2023 FR 2306358
(43) Date de publication de la demande: 25.12.2024
(73) Titulaire: ATLANTIC MERVILLE BILLY-BERCLAU, 59660 Merville (FR)
(72) Inventeur: FONTBONNE, Erwan, 69670 Vaugneray (FR); HILLION, Grégoire, 59480 La Bassée (FR); DEMETS, Martin, 59134 Herlies (FR)
(74) Mandataire: Ipsilon

(56) Documents cités:
- FR-A1- 3 036 463
- FR-A1- 3 043 752
- FR-A1- 3 098 570

## Description

### Domaine technique

La présente invention concerne un dispositif combiné de chauffage de l'eau sanitaire et de l'eau de chauffage d'un local.

L'invention concerne également un système de chauffage de l'eau sanitaire et de l'eau de chauffage d'un local comprenant un tel dispositif combiné et une installation de chauffage d'un local et une installation de chauffage d'eau sanitaire.

### Arrière-plan technologique

Il est connu de combiner dans un même dispositif le chauffage de l'eau sanitaire et de l'eau de chauffage d'un local au moyen d'une pompe à chaleur. Ce type de dispositif est appelé « pompe à chaleur double service » car le chauffage de l'eau sanitaire ainsi que de l'eau de chauffage est réalisé via une seule pompe à chaleur comprenant un module hydraulique associé à un ballon de stockage à l'intérieur du local et une unité extérieure destinée à être disposée à l'extérieur du local.

L'encombrement des systèmes de chauffage est un enjeu majeur car l'espace laissé à leur installation ou leur maintenance est de plus en plus faible. Les logements sont en effet de plus en plus petits et le volume occupé par ces systèmes de chauffage doit être le plus faible et le moins contraignant possible. Ainsi, il est notamment intéressant que l'emprise au sol du dispositif combiné soit la plus faible possible pour laisser de la place aux autres éléments du foyer, généralement un lave-linge ou un sèche-linge ou bien encore des canalisations.

Il est également classique désormais dans la construction neuve de placer le système de chauffage à l'intérieur de placards ce qui laisse un accès très restreint pour l'installation et la maintenance de ces systèmes de chauffage.

Un ballon de stockage classique présente un volume d'au moins 150L ce qui représente une masse de près de 200kg en charge, uniquement pour le ballon de stockage. Le module hydraulique représente généralement une masse supplémentaire d'au moins 50Kg ce qui amène généralement les dispositifs combinés à être posés au sol.

Comme indiqué ci-dessus, cette configuration au sol présente une emprise au sol importante et n'est pas compatible l'installation d'une machine ou de canalisation sous le système de chauffage. Ce type de solutions est donc contraignant. De plus, les connexions hydrauliques ou frigorifiques sont généralement disposées sur le côté de l'appareil ce qui oblige à laisser libre l'espace environnant ces connexions pour l'installation ou la maintenance. L'encombrement latéral du dispositif combiné est ainsi plus important que les dimensions de l'appareil lui-même. Une configuration d'installation dans un placard (i.e. avec des parois latérales bordant le ballon de stockage) est ici impossible, a fortiori un placard disposé en hauteur.

Le document FR 3 043 752 A1 divulgue un dispositif pour la fixation d'un équipement sur une paroi verticale. Le document FR 3 098 570 A1 divulgue un dispositif combiné selon le préambule de la revendication 1. Le document FR 3 096 463 a1 divulgue un dispositif pour l'implantation au sol d'une chaudière de type "murale".

Il existe donc un besoin pour un dispositif combiné permettant une installation et une maintenance facilitée en hauteur réduisant l'emprise au sol du dispositif au sol et son encombrement latéral.

### Résumé de l'invention

Pour cela, l'invention propose un dispositif combiné de chauffage de l'eau sanitaire et de l'eau de chauffage d'un local, le dispositif combiné s'étendant le long d'un axe longitudinal, ledit dispositif combiné comprenant :
- un ballon de stockage d'eau sanitaire,
- un module hydraulique comprenant un circuit d'eau sanitaire destiné à être en communication de fluide avec le ballon de stockage et un circuit d'eau de chauffage, le module hydraulique comprenant en outre au moins un échangeur de chaleur pour transférer de la chaleur à de l'eau de chauffage présente dans le circuit d'eau de chauffage,
- un système de fixation pour fixer au-dessus du sol le ballon de stockage et le module hydraulique à un support, le système de fixation comprenant un corps de fixation destiné à rester fixe par rapport au support et au moins un bras de fixation mobile par rapport audit corps de fixation et configuré pour être fixé au ballon de stockage, ledit au moins un bras de fixation étant mobile entre une position déployée dans laquelle le ballon de stockage est posé au sol et une position rabattue dans laquelle le ballon de stockage est disposé contre le support, au-dessus du module hydraulique,
dans lequel le module hydraulique comprend une enveloppe externe ouverte au niveau d'une face de dessus, d'une face arrière et/ou d'une face avant de sorte que ledit au moins un bras de fixation est au moins partiellement disposé dans le module hydraulique, au travers de la face de dessus, de la face arrière et/ou de la face avant, lorsque ledit au moins un bras de fixation est en position déployée.

En premier lieu, l'utilisation d'un dispositif combiné suspendue au-dessus du sol permet d'une part de libérer de l'espace au sol, notamment pour des canalisations ou pour permettre le rangement de matériel.

Ensuite, le dispositif combiné présente une configuration dans laquelle le ballon de stockage est disposé au-dessus du module hydraulique lorsque le dispositif combiné est dans une position fonctionnelle, i.e. une position dans laquelle le module hydraulique et le ballon de stockage sont fixés au système de fixation et peuvent être raccordés hydrauliquement entre eux. Cette configuration permet de disposer l'ensemble des raccords de connexion et des organes du module hydraulique nécessitant un raccordement ou une opération de maintenance à mi-hauteur pour un installateur. Ceci permet de faciliter les opérations d'installation et de maintenance, réduisant ainsi le temps nécessaire à ces opérations.

Enfin, le dispositif combiné comprend un bras de fixation mobile permettant de supporter et guider le ballon de stockage depuis le sol vers sa position fonctionnelle au-dessus du module hydraulique. Ce bras de fixation permet ainsi d'aider l'installateur, tant du point de vue de la reprise des efforts que de l'aide au positionnement du ballon de stockage, et de rendre possible une installation en hauteur du ballon de stockage. Le découplage du ballon de stockage et du module hydraulique permet également de fractionner le dispositif combiné en sous-ensembles pesant environ 50Kg maximum, rendant ainsi possible une installation par un seul utilisateur.

Le fait que le bras de fixation 48 traverse le module hydraulique 15 lorsqu'il est en position déployée permet au ballon de stockage d'être disposé à une position plus haute tout en évitant une collision du bras de fixation 48 avec le module hydraulique 15 ou une cinématique trop complexe du bras de fixation 48.

Selon un mode de réalisation du dispositif combiné, l'enveloppe externe du module hydraulique définit un espace intérieur comprenant une zone frontale, une zone arrière, une zone supérieure, une zone inférieure et deux zones latérales, le circuit d'eau sanitaire, le circuit d'eau de chauffage et ledit au moins un échangeur étant disposés dans les zones inférieure et latérales pour permettre aux zones frontale, arrière et supérieure d'être au moins partiellement libres pour recevoir ledit au moins un bras de fixation lorsqu'il est disposé dans la position déployée.

Selon un mode de réalisation du dispositif combiné, ledit au moins un bras de fixation est configuré pour parcourir lors de son mouvement depuis la première vers la deuxième positions :
- entre 30% et 100% de la zone de dessus le long d'un axe perpendiculaire à l'axe longitudinal, de préférence entre 60% et 100% de la zone de dessus, et
- entre 30% et 100% de la zone frontale le long d'un axe parallèle à l'axe longitudinal, de préférence entre 60% et 100% de la zone frontale.

Selon un mode de réalisation du dispositif combiné, ledit au moins un bras de fixation est en outre configuré pour parcourir lors de son mouvement depuis la première vers la deuxième positions entre 0 et 30% de la zone arrière le long d'un axe parallèle à l'axe longitudinal.

Selon un mode de réalisation du dispositif combiné, le module hydraulique comprend une platine de raccordement du circuit d'eau de chauffage à au moins une installation d'eau de chauffage du local et du circuit d'eau sanitaire à une installation d'eau sanitaire du local, ladite platine de raccordement étant fixée sur le système de fixation.

Selon un mode de réalisation du dispositif combiné, ledit au moins un bras de fixation est un système de pantographe permettant, lors d'un déplacement de la position déployée vers la position rabattue, de déplacer le ballon de stockage selon une trajectoire combinant un mouvement de rotation et un mouvement de translation.

Selon un mode de réalisation du dispositif combiné, le système de pantographe comprend au moins un mécanisme de bras articulés par rapport au corps de fixation, ledit au moins un mécanisme de bras articulés comprenant un premier bras articulé par rapport au corps de fixation autour d'un axe d'articulation et un deuxième bras articulé par rapport au premier bras, le deuxième bras comprenant une interface de fixation avec le ballon de stockage.

Selon un mode de réalisation du dispositif combiné, le premier bras est articulé au corps de fixation au moyen d'un mécanisme de translation permettant à un point d'articulation entre le premier bras et le corps de fixation d'être déplacé en translation le long d'une direction perpendiculaire à l'axe d'articulation pendant le déplacement du système de pantographe entre les positions déployée et rabattue.

Selon un mode de réalisation du dispositif combiné, le point d'articulation est disposé à une première hauteur lorsque le système de pantographe est disposé dans la position rabattue et à une deuxième hauteur lorsque le système de pantographe est disposé dans la position déployée, la deuxième hauteur étant supérieure à la première hauteur de manière à limiter l'insertion du système de pantographe dans le module hydraulique et à rapprocher le ballon de stockage du module hydraulique lorsque le système de pantographe termine son déplacement vers la position rabattue.

Selon un mode de réalisation du dispositif combiné, le corps de fixation comprend une fente de translation s'étendant perpendiculaire à l'axe d'articulation et dans laquelle une extrémité proximale du premier bras est configurée pour se déplacer, le mécanisme de translation comprenant une bielle articulée par rapport au corps de fixation au niveau d'une extrémité et au premier bras au niveau d'une extrémité opposée de manière à contraindre le déplacement en translation de l'extrémité proximale du premier bras lors de son déplacement entre les positions rabattue et déployée.

Selon un mode de réalisation du dispositif combiné, le corps de fixation comprend deux montants s'étendant parallèlement entre eux le long d'un axe longitudinal, le système de pantographe comprenant deux mécanismes de bras articulés chacun par rapport à un montant du corps de fixation, les deux mécanismes de bras étant fixés entre eux et s'étendant parallèlement entre eux, le ballon de stockage étant configuré pour être fixé à chacun des deux mécanismes de bras.

Selon un mode de réalisation du dispositif combiné, le système de fixation comprend au moins un système de verrouillage du ballon de stockage lorsque ledit au moins un bras de fixation est en position rabattue pour verrouiller le ballon de stockage dans une position fonctionnelle.

Selon un mode de réalisation du dispositif combiné, le premier bras est articulé au corps de fixation au niveau d'une portion inférieure du corps de fixation, ledit au moins un système de verrouillage du ballon de stockage étant disposé au niveau d'une portion supérieure du corps de fixation.

Selon un mode de réalisation du dispositif combiné, le système de fixation comprend au moins un pied destiné à être positionné contre le sol pour supporter au moins partiellement le poids du ballon de stockage et du module hydraulique.

Selon un mode de réalisation du dispositif combiné, ledit au moins un pied s'étend au niveau d'une face arrière du système de fixation de manière à maintenir un espace de rangement libre sous le module hydraulique.

L'invention concerne également un système de chauffage de l'eau sanitaire et de l'eau de chauffage d'un local comprenant :
- un dispositif combiné tel que décrit ci-dessus comprenant en outre une unité extérieure disposée à l'extérieur du local, le ballon de stockage, le système de fixation et le module hydraulique étant disposés dans le local,
- au moins une installation d'eau sanitaire comportant au moins un point de puisage et au moins une installation d'eau de chauffage comprenant au moins un système d'émission de chaleur pour chauffer le local, reliées respectivement au circuit d'eau sanitaire et au circuit d'eau de chauffage du dispositif combiné.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 représente un schéma hydraulique d'un dispositif combiné de chauffage de l'eau de chauffage et de l'eau sanitaire;
[fig. 2] La figure 2 représente une vue en perspective du dispositif combiné de chauffage de la figure 1 comprenant un ballon de stockage, un module hydraulique et un système de fixation du ballon de stockage et du module hydraulique à un support;
[fig. 3] La figure 3 représente une vue en perspective éclatée du dispositif combiné de la figure 2.
[fig. 4] La figure 4 représente une vue en perspective du système de fixation du dispositif combiné de la figure 2 en position rabattue.
[fig. 5] La figure 5 représente une vue en perspective du système de fixation du dispositif combiné de la figure 2 dans une position intermédiaire entre la position rabattue et une position déployée ;
[fig. 6] La figure 6 représente une vue en perspective détaillée du module hydraulique lorsqu'il est ouvert, avec un vase d'expansion et un coffret électrique dans une position libérant l'accès à l'intérieur du module hydraulique, le ballon de stockage n'étant pas disposé au-dessus du module hydraulique et le système de fixation en position rabattue ;
[fig. 7] La figure 7 représente une vue en perspective du dispositif combiné de la figure 2 avec le module hydraulique ouvert tel que sur la figure 6 et le système de fixation en position déployée ;
[fig. 8] La figure 8 représente une vue en perspective du dispositif combiné de la figure 2 avec le module hydraulique ouvert tel que sur la figure 6 et le ballon de stockage fixé au système de fixation qui est disposé dans une position intermédiaire entre les positions déployée et rabattue ;
[fig. 9] La figure 9 représente une vue en perspective détaillée du dispositif combiné de la figure 2 avec le ballon de stockage fixé au système de fixation qui est disposé dans la position rabattue.

### Description de mode(s) de réalisation

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

Il est proposé un dispositif combiné 10 de chauffage de l'eau sanitaire et de l'eau de chauffage d'un local.

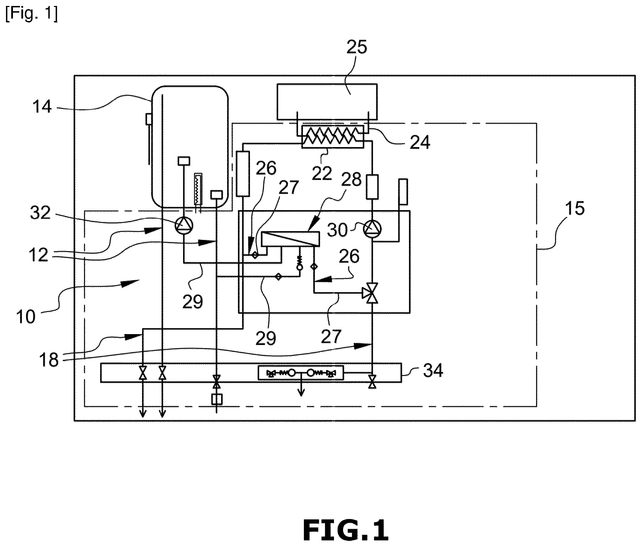

En référence à la figure 1, le dispositif combiné 10 comprend un ballon de stockage d'eau sanitaire 14, un module hydraulique 15 destiné à être raccordé au ballon de stockage 14 et une unité extérieure 25 destinée à être raccordée au module hydraulique 15.

Le module hydraulique 15 comprend un circuit d'eau sanitaire 12 destiné à être raccordée à des organes de distribution d'eau sanitaire, tels que des robinets, et un circuit d'eau de chauffage 18 destiné à être raccordé à des organes de chauffage d'un local, tels que des radiateurs. Le circuit d'eau sanitaire 12 est destiné à être en communication de fluide avec le ballon de stockage 14.

Le module hydraulique 15 comprend également un premier échangeur 22 apte à échanger de la chaleur entre un circuit de fluide caloporteur 24 et le circuit d'eau de chauffage 18. En particulier, le circuit de fluide caloporteur 24 échange de la chaleur entre un milieu extérieur au local et le circuit d'eau de chauffage 18 présent à l'intérieur du local. Pour ce faire, l'unité extérieure 25 est disposée au niveau du milieu extérieur et configurée pour échanger de la chaleur avec le circuit de fluide caloporteur 24. L'unité extérieure 25, le circuit de fluide caloporteur 24 et le premier échangeur 22 de chaleur forment une pompe à chaleur apte à faire varier la température de l'eau de chauffage présente dans le circuit d'eau de chauffage 18.

Le module hydraulique 15 comprend en outre un circuit de chauffage de l'eau sanitaire 26 comprenant un deuxième échangeur de chaleur 28 pour échanger de la chaleur entre l'eau de chauffage et l'eau sanitaire. Pour cela, Le circuit de chauffage de l'eau sanitaire 26 comprend une première dérivation 27 raccordée au circuit d'eau de chauffage 18 et s'étendant à l'intérieur du deuxième échangeur de chaleur 28. De l'eau de chauffage s'écoule ainsi dans la première dérivation 27 et donc au travers du deuxième échangeur 28. Le circuit de chauffage de l'eau sanitaire 26 comprend en outre une deuxième dérivation 29 raccordée au circuit d'eau sanitaire 12 et s'étendant à l'intérieur du deuxième échangeur de chaleur 28. De l'eau sanitaire s'écoule ainsi dans la deuxième dérivation 29 et donc au travers le deuxième échangeur de chaleur 28. Un échange de chaleur est ainsi possible entre l'eau de chauffage et l'eau sanitaire au sein du deuxième échangeur de chaleur 28. Il est ainsi possible de faire varier la température de l'eau sanitaire au moyen de l'eau de chauffage.

Le module hydraulique 15 comprend par ailleurs un premier circulateur 30 disposé dans le circuit d'eau de chauffage 18 pour faire circuler l'eau de chauffage et un deuxième circulateur 32 dans la deuxième dérivation 29 pour faire circuler l'eau sanitaire. Le module hydraulique 15 comprend également un vase d'expansion 33 pour absorber les variations de volume de l'eau générées par les changements de température.

Le deuxième échangeur de chaleur 28 est de préférence un échangeur à plaques disposé à l'extérieur du ballon de stockage d'eau sanitaire 14. Ainsi, le volume intérieur du ballon de stockage 14 est pleinement disponible pour stocker l'eau sanitaire, sans échangeur de chaleur en son sein. Le volume disponible à l'intérieur du ballon de stockage 14 est ainsi plus important que dans le cas d'un ballon à serpentin pour un même volume extérieur du ballon de stockage 14. En effet, le volume « mort » ou indisponible se trouvant à l'emplacement du serpentin et en-dessous de celui-ci n'est pas présent ici. Les dimensions et la masse du ballon de stockage 14 peuvent être réduites vis-à-vis du ballon de stockage 14 tout en conservant un même volume utile de stockage d'eau sanitaire.

De plus, l'utilisation d'un échangeur de chaleur disposé à l'extérieur du ballon de stockage 14 est plus robuste en termes de performances et plus flexible que les solutions avec serpentin immergé.

Dans les solutions connues avec serpentin immergé, obtenir une bonne performance lors d'une chauffe de l'eau sanitaire requiert notamment :
- d'attendre que le ballon de stockage 14 soit le plus froid possible (idéalement il faut que l'ensemble du serpentin baigne dans l'eau froide) pour démarrer la chauffe avec la température de condensation la plus basse possible (plus la température de condensation d'une pompe à chaleur est basse et plus la performance est élevée), et
- d'éviter qu'un soutirage survienne lors de la chauffe car l'eau froide qui va arriver en partie basse du ballon de stockage 14 va rallonger le temps de chauffe sans pour autant faire descendre la température de condensation du ballon (car le serpentin reste majoritairement baigné dans l'eau en cours de chauffe). La performance moyenne sera donc directement dégradée.

Dans la pratique, il n'est pas toujours possible d'attendre que le ballon de stockage 14 soit le plus froid possible car le confort de l'utilisateur est prioritaire sur la performance. D'autre part, éviter les soutirages lors de la chauffe de l'eau sanitaire incite à effectuer des chauffes plutôt rapides. Or, une chauffe plus rapide de l'eau sanitaire signifie une puissance échangée plus importante. Or la surface d'échange étant constante cela a pour conséquence de dégrader la qualité de l'échange et donc la performance.

Le module hydraulique 15 comprend en outre une platine de raccordement 34 rapide du circuit d'eau de chauffage 18 à au moins une installation d'eau de chauffage du local et du circuit d'eau sanitaire 12 à une installation d'eau sanitaire du local. La platine de raccordement 34 comprend des raccords de départ et de retour d'eau sanitaire pour raccorder le circuit d'eau sanitaire 12 à l'installation d'eau sanitaire du local. La platine de raccordement 34 comprend en outre des raccords de départ et de retour d'eau de chauffage pour raccorder le circuit d'eau de chauffage 18 à l'installation d'eau de chauffage du local. Ainsi l'ensemble des raccords des circuits d'eau sanitaire 12 et d'eau de chauffage 18 sont disposés au niveau d'une même interface. Le raccordement du dispositif combiné 10 aux installations d'eau de chauffage et d'eau sanitaire du local est ainsi facilité pour l'installateur.

La platine de raccordement 34 permet de connaître préalablement à la mise en place du dispositif combiné 10 la position de chacun des raccords. Ceci est particulièrement utile lorsque le dispositif combiné 10 est destiné à être installé dans une construction neuve car la mise en place des installations d'eau de chauffage et d'eau sanitaire du local peut être réalisée avant la mise en place dispositif combiné 10.

L'installation de l'unité extérieure 25 peut requérir un corps de métier (frigoriste) différent de l'installation des circuits d'eau de chauffage et d'eau sanitaire (plombier). La platine de raccordement 34 permet ainsi aux différents installateurs de réaliser leur partie de l'installation indépendamment. La platine de raccordement 34 permet donc une grande flexibilité de mise en place de ces installations ainsi que du dispositif combiné 10.

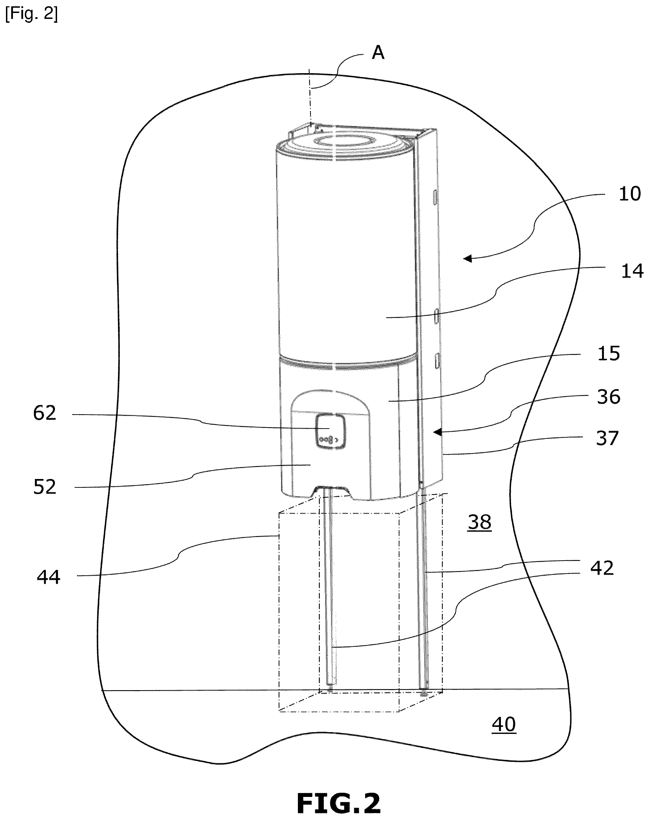

En référence à la figure 2, le dispositif combiné 10 comprend trois sous-ensembles principaux : le ballon de stockage 14, le module hydraulique 15 et un système de fixation 36 pour fixer au-dessus du sol 40 le ballon de stockage 14 et le module hydraulique 15 à un support, par exemple un mur 38.

Le dispositif combiné 10 comprend en outre un coffret électrique 35 disposé à l'intérieur du module hydraulique 15. Le coffret électrique 35 peut comporter une interface homme-machine accessible au travers d'une paroi du module hydraulique 15. Le coffret électrique 35 est de préférence disposé au niveau d'une face avant du module hydraulique 15 pour en faciliter la visibilité et l'accès.

Le dispositif combiné 10 s'étend le long d'un axe longitudinal A destiné à être orienté verticalement lorsque le dispositif combiné 10 est installé au support.

L'axe de révolution du ballon de stockage 14 s'étend de préférence le long de l'axe longitudinal A pour faciliter le raccordement au module hydraulique 15.

Le système de fixation 36 comprend au moins un pied 42 destiné à être positionné contre le sol 40 pour supporter au moins partiellement le poids du ballon de stockage 14 et du module hydraulique 15. Le ou les pieds 42 permettent notamment d'installer le dispositif combiné 10 sur un support dont la résistance est limitée, comme un mur de plâtre en répartissant le poids du dispositif combiné 10 sur le mur 38 et sur le sol 40.

Ledit au moins un pied 42 s'étend de préférence au niveau d'une face arrière 37 du système de fixation 36 de manière à maintenir un espace de rangement libre 44 sous le module hydraulique 15. Le ou les pieds 42 s'étendent donc ainsi le long ou à proximité du support, ici du mur 38.

Cet espace de rangement libre 44 est de préférence apte à permettre l'installation d'un sèche-linge ou d'un lave-linge. Ainsi, l'espace de rangement libre 44 présente de préférence une hauteur minimale de 90cm.

De manière préférée, le système de fixation 36 comprend deux pieds s'étendant au niveau de la face arrière 37 du système de fixation 36 de manière à maintenir l'espace de rangement libre 44 sous le module hydraulique 15.

Le ou les pieds 42 sont de préférence escamotables. Le système de fixation 36 peut comprendre un dispositif de verrouillage (non visible) pour verrouiller un ou plusieurs positions des pieds 42 pour s'adapter aux particularités du local ou aux souhaits de l'utilisateur.

Les pieds 42 s'étendent le long de l'axe longitudinal A du dispositif combiné 10. En d'autres termes, les pieds 42 s'étendent le long d'un axe vertical lorsque le dispositif combiné 10 est installé au support.

Le ballon de stockage 14 est disposé au-dessus du module hydraulique 15 lorsque le dispositif combiné 10 est dans une position fonctionnelle, i.e. une position dans laquelle le module hydraulique 15 et le ballon de stockage 14 sont fixés au système de fixation 36 et peuvent être raccordés hydrauliquement entre eux. Cette configuration permet de disposer l'ensemble des raccords de connexion et des organes du module hydraulique 15 nécessitant un raccordement ou une opération de maintenance d'être à mi-hauteur pour un installateur. Ceci permet de faciliter les opérations d'installation et de maintenance, réduisant ainsi le temps nécessaire à ces opérations.

Le découplage du ballon de stockage 14 et du module hydraulique 15 permet également de fractionner le dispositif combiné en sous-ensembles pesant environ 50Kg maximum, rendant ainsi possible une installation par un seul utilisateur.

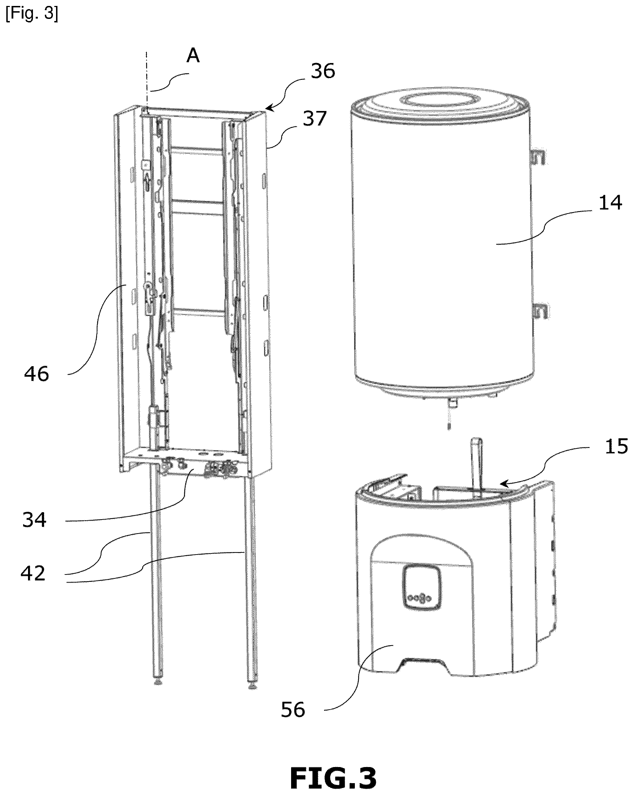

En référence à la figure 3, le système de fixation 36 comprend un corps de fixation 46 destiné à rester fixe par rapport au support. Ainsi, le corps de fixation 46 est destiné à servir de châssis au système de fixation 36 et est donc fixé directement au support, ici le mur 38. Le corps de fixation 46 comprend notamment deux montants s'étendant parallèlement entre eux le long de l'axe longitudinal A. Ces deux montants sont fixés l'un à l'autre pour former un cadre à fixer au mur 38.

La platine de raccordement 34 du module hydraulique 15 est amovible par rapport au corps du module hydraulique 15 et fixé au système de fixation 36. Ainsi, le point de raccordement que constitue la platine de raccordement 34 peut être installé au support en amont de l'installation hydraulique, i.e. du module hydraulique 15, ou de l'installation frigorifique, i.e. de l'unité extérieure 25. Ce positionnement de la platine de raccordement 34 sur le corps de fixation 46 rend l'installation encore plus aisée pour les installateurs.

Le système de fixation 36 comprend également au moins un bras de fixation 48 mobile par rapport audit corps de fixation 46. En particulier, le bras de fixation 48 est mobile en rotation autour d'un axe d'articulation B. Le système de fixation 36 comprend de préférence deux bras de fixation 48 s'étendant parallèlement entre eux dans un plan perpendiculaire à l'axe d'articulation B de manière à faciliter la répartition du poids du ballon de stockage 14 sur le système de fixation 36. Le système de fixation 36 sera décrit ci-dessous en lien avec un seul bras de fixation 48 mais cette description est compatible avec une configuration à deux bras de fixation 48.

Le bras de fixation 48 est fixé à une première extrémité au corps de fixation 46 et configuré pour être fixé au ballon de stockage 14 au niveau d'une deuxième extrémité opposée à la première extrémité.

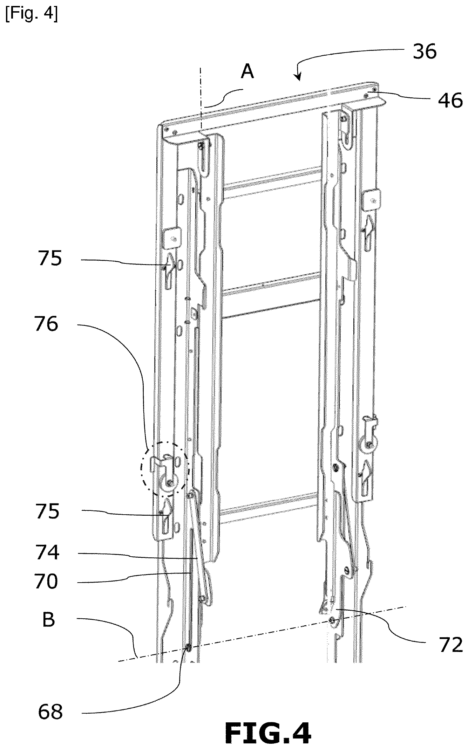

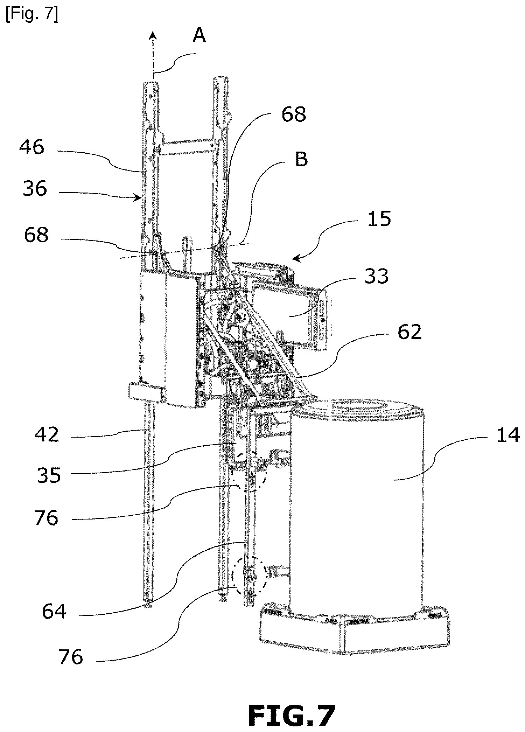

Le bras de fixation 48 est mobile entre :
- une position rabattue, visible en figure 4, dans laquelle le ballon de stockage 14 peut être disposé contre le support, au-dessus du module hydraulique 15, et
- une position déployée, visible en figure 7, dans laquelle le ballon de stockage 14 est posé au sol 40.

Le bras de fixation 48 permet de supporter et guider le ballon de stockage 14 depuis le sol 40 vers sa position fonctionnelle au-dessus du module hydraulique 15. Le bras de fixation 48 permet ainsi d'aider l'installateur, tant du point de vue de la reprise des efforts que de l'aide au positionnement du ballon de stockage 14, et de rendre possible une installation en hauteur du ballon de stockage 14.

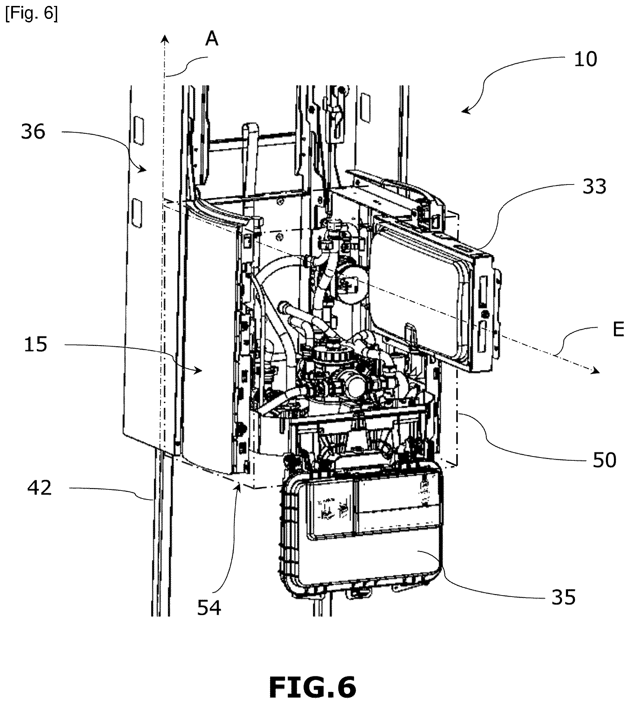

En référence à la figure 6, le module hydraulique 15 définit une enveloppe externe 50 renfermant l'ensemble des organes et circuits du module hydraulique 15. Cette enveloppe externe 50 est par exemple délimitée par un corps de couverture 14 correspondant aux parois externes visibles du module hydraulique 15.

L'enveloppe externe 50 comprend une face avant, une face arrière, une face de dessus, une face de dessous et deux faces latérales se faisant face. La face avant de l'enveloppe externe 50 correspond à une paroi frontale 56 du module hydraulique 15. La face arrière est destinée à être disposé face au support, ici le mur 38.

L'enveloppe externe 50 est par exemple parallélépipédique à base rectangle ou carrée.

L'enveloppe externe 50 définit un espace intérieur 54 comprenant une zone frontale, une zone arrière, une zone supérieure, une zone inférieure et deux zones latérales.

La zone frontale correspond à une portion de l'espace intérieur 54 comprenant la face avant. La zone arrière correspond à une portion de l'espace intérieur 54 comprenant la face arrière. La zone supérieure correspond à une portion de l'espace intérieur 54 comprenant la face de dessus. La zone inférieure correspond à une portion de l'espace intérieur 54 comprenant la face de dessous. Les zones latérales correspondent respectivement à une portion de l'espace intérieur 54 comprenant une des faces latérales.

De préférence, chacune des zones frontale, arrière, supérieure, inférieure et latérales correspondent au maximum à 50% du volume total de l'espace intérieur 54. Plusieurs de ces zones peuvent se recouper entre elles, notamment au niveau des bords de l'espace intérieur 54.

Le bras de fixation 48 est configuré pour parcourir lors de son mouvement depuis la première vers la deuxième positions entre 30% et 100% de la zone de dessus le long d'un axe transversal E perpendiculaire à l'axe longitudinal A. Autrement dit, le bras de fixation 48 balaie 30 à 100% de la zone de dessus le long d'un axe horizontal lorsque le dispositif combiné 10 est installé sur un support 38. De manière préférée, le bras de fixation 48 est configuré pour parcourir lors de son mouvement depuis la première vers la deuxième positions entre 30% et 100% de la zone de dessus le long de l'axe transversal E. En particulier, la portion de la zone de dessus balayée par le bras de fixation 48 s'étend depuis la face avant du module hydraulique 15, le long de l'axe perpendiculaire à l'axe longitudinal A.

Le bras de fixation 48 est également configuré pour parcourir lors de son mouvement depuis la première vers la deuxième positions entre 30% et 100% de la zone frontale le long d'un axe parallèle à l'axe longitudinal A. Autrement dit, le bras de fixation 48 balaie 30 à 100% de la zone frontale le long d'un axe vertical lorsque le dispositif combiné 10 est installé sur un support 38. De manière préférée, le bras de fixation 48 est configuré pour parcourir lors de son mouvement depuis la première vers la deuxième positions entre 30% et 100% de la zone de dessus le long d'un axe parallèle à l'axe longitudinal A. En particulier, la portion de la zone frontale balayée par le bras de fixation 48 s'étend depuis la face de dessus du module hydraulique 15, le long de l'axe parallèle à l'axe longitudinal A.

Le bras de fixation 48 est en outre configuré pour parcourir lors de son mouvement depuis la première vers la deuxième positions entre 0% et 30% de la zone arrière le long d'un axe parallèle à l'axe longitudinal A. Autrement dit, le bras de fixation 48 balaie 0 à 30% de la zone arrière le long d'un axe vertical lorsque le dispositif combiné 10 est installé sur un support 38. En particulier, la portion de la zone arrière balayée par le bras de fixation 48 s'étend depuis la face de dessus du module hydraulique 15, le long de l'axe parallèle à l'axe longitudinal A.

Pour permettre une installation du ballon de stockage 14 suffisamment haute pour libérer l'espace de rangement 44 tout en permettant une cinématique simple du bras de fixation 48, l'enveloppe externe 50 est ouverte au niveau de la face de dessus, arrière et/ou de la face avant. Ainsi, le bras de fixation 48 est au moins partiellement disposé dans l'espace intérieur 54 du module hydraulique 15, au travers de la face de dessus, arrière et/ou de la face avant, lorsque le bras de fixation 48 est en position déployée.

Le fait que le bras de fixation 48 traverse le module hydraulique 15 lorsqu'il est en position déployée permet de conserver le module hydraulique 15 en place lors de l'installation ou du retrait du ballon de stockage 14 ce qui est particulièrement utile pour la maintenance du dispositif combiné 10.

De plus, cette configuration traversante du bras de fixation 48 permet à l'installateur de venir disposer le ballon de stockage au plus près du dispositif combiné 10 avant sa montée.

Cette ouverture de l'enveloppe externe 50 peut être réalisée au moyen de fentes ou de découpes dans les faces avant et/ou supérieure de l'enveloppe externe. De manière plus générale, ces ouvertures de l'enveloppe externe 50 peuvent être réalisées en laissant les faces arrière, de dessus et frontale libres. De manière alternative ou combinée, ces ouvertures peuvent être réalisées en rendant les faces avant, arrière et/ou supérieure escamotables ou amovibles. En particulier, la face arrière et la face de dessus du module hydraulique 15 sont libres et la face frontale obstruée par une façade frontale amovible dans l'exemple illustré dans les figures.

Garantir l'absence de collision entre le module hydraulique 15 et le bras de fixation 48 est rendue possible car le circuit d'eau sanitaire12, le circuit d'eau de chauffage 18 et le deuxième échangeur 28 sont disposés dans les zones inférieure et latérales de l'enveloppe externe 50 pour permettre aux zones frontale, arrière et supérieure d'être libres et donc de pouvoir recevoir ledit au moins un bras de fixation 48 lorsqu'il est disposé dans la position déployée. La zone arrière peut être partiellement libre, notamment dans sa portion supérieure, de manière à permettre au bras de fixation de parcourir ou traverser cette portion supérieure lors de son déplacement dans la deuxième position. Dans ce dernier cas, le circuit d'eau sanitaire12, le circuit d'eau de chauffage 18 et le deuxième échangeur 28 peuvent être au moins partiellement disposés dans une portion inférieure de la zone arrière.

Cette ouverture de l'enveloppe externe 50 est également obtenue par un agencement spécifique du vase d'expansion 33 et du coffret électrique 35. Le vase d'expansion 33 et le coffret électrique 35 sont disposés ici au niveau de la face avant de l'enveloppe externe 50, au niveau de la portion frontale. Le vase d'expansion 33 et le coffret électrique 35 sont escamotables et/ou amovibles de sorte qu'ils peuvent être déplacés entre une position fonctionnelle dans laquelle ils sont disposés dans la portion frontale (figures 2 et 3) et une position de maintenance (figure 6) dans laquelle ils sont disposés hors ou partiellement hors de cette portion frontale. En particulier, le vase d'expansion 33 et le coffret électrique 35 sont configurés de sorte qu'ils sont disposés hors de la trajectoire du bras de fixation 48 lorsqu'ils sont déplacés dans leur position de maintenance.

Pour réaliser cette mobilité, un système de charnière et/ou de glissière peut être prévu entre le vase d'expansion 33 et le corps de fixation 46 et entre le coffret électrique 35 et le corps de fixation 46.

Le coffret électrique 35 et le vase d'expansion 33 sont donc disposés hors de la zone de jonction 58 lorsqu'ils sont disposés dans leur position de maintenance.

Selon une configuration préférée, le bras de fixation 48 s'étend au travers d'une zone centrale de l'espace intérieur 54. La zone centrale est disposée au centre des zones frontale, arrière, supérieure, inférieure et latérales.

Selon un mode de réalisation préféré, le ou les bras de fixation 48 forment un système de pantographe permettant, lors d'un déplacement de la position déployée vers la position rabattue, de déplacer le ballon de stockage 14 selon une trajectoire combinant un mouvement de rotation et un mouvement de translation.

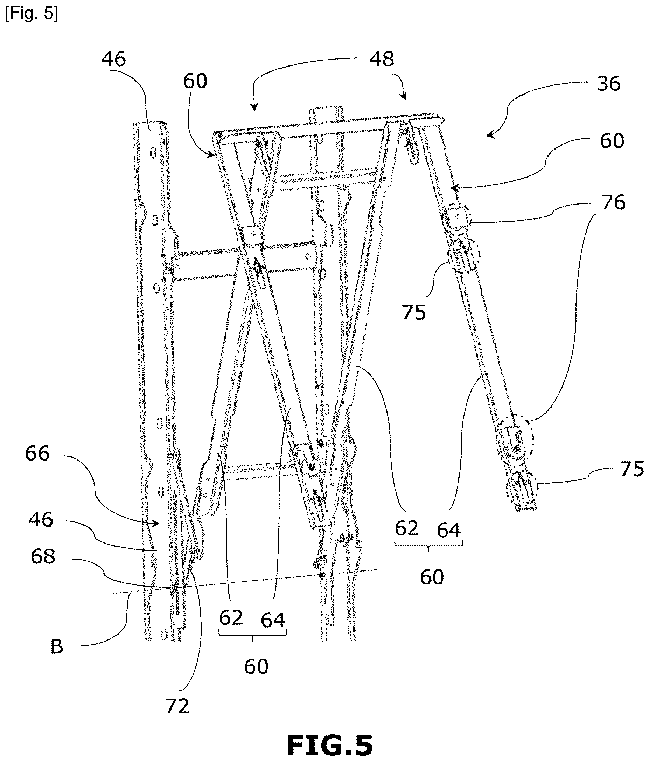

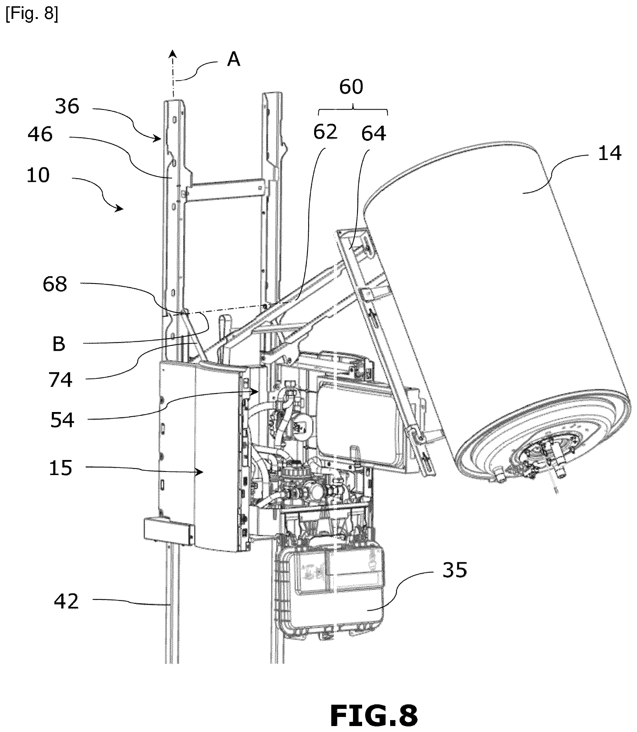

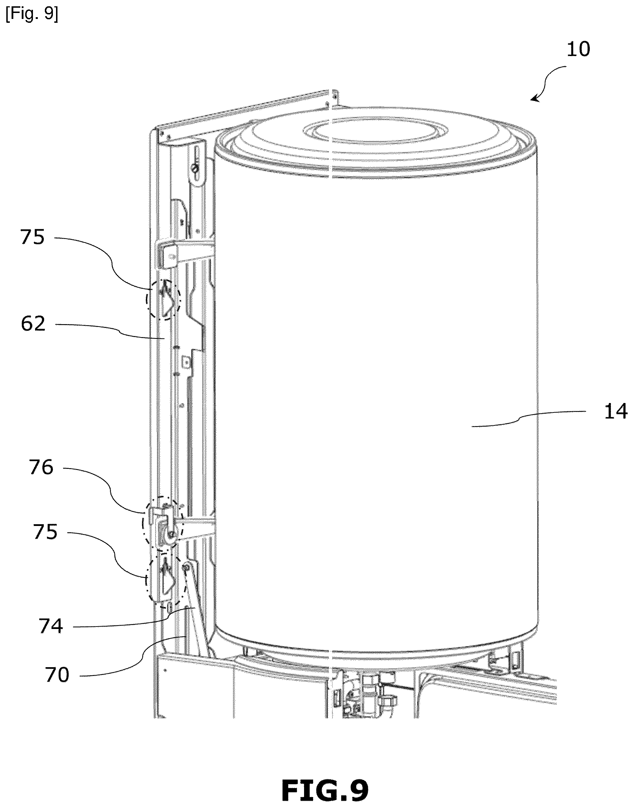

Le système de pantographe est plus particulièrement visible sur les figures 4 à 9. Les figures 4 et 5 représente le système de pantographe seul sans ballon de stockage 14 et les figures 6 à 9 représentent le système de pantographe fixé au ballon de stockage 14 respectivement dans la position déployée, une position intermédiaire et la position rabattue.

En référence aux figures 4 et 5, le système de pantographe comprend au moins un mécanisme de bras 60 articulés par rapport au corps de fixation 46. Le mécanisme de bras 60 comprend un premier bras 62 articulé par rapport au corps de fixation 46 autour de l'axe d'articulation B et un deuxième bras 64 articulé par rapport au premier bras 62. Le deuxième bras 64 comprend une interface de fixation avec le ballon de stockage 14 pour maintenir le ballon de stockage sur le mécanisme de bras 60 et donc le système de pantographe.

Le premier bras 62 est articulé au corps de fixation 46 au niveau d'un point d'articulation 68. Ainsi, le premier bras 62 est mobile en rotation autour de l'axe d'articulation B par rapport au corps de fixation 46 au niveau de ce point d'articulation 68.

Le premier bras 62 est de préférence articulé au corps de fixation au moyen d'un mécanisme de translation 66 permettant au point d'articulation 68 d'être déplacé en translation le long de l'axe longitudinal A, i.e. une direction perpendiculaire à l'axe d'articulation B, pendant le déplacement du système de pantographe entre les positions déployée et rabattue. Le mécanisme de translation 66 permet une variation de la hauteur du point d'articulation 68 le long de l'axe longitudinal A au cours du système de pantographe entre les positions déployée et rabattue.

Le point d'articulation 68 est disposé à une première hauteur lorsque le système de pantographe est disposé dans la position rabattue (figure 4) et à une deuxième hauteur lorsque le système de pantographe est disposé dans la position déployée (figure 7). La deuxième hauteur est supérieure à la première hauteur de manière à limiter l'insertion du système de pantographe dans le module hydraulique 15. Cette variation de hauteur permet également de rapprocher le ballon de stockage 14 du module hydraulique 15 lorsque le système de pantographe termine son déplacement vers la position rabattue.

Le corps de fixation 46 comprend une fente de translation 70 s'étendant perpendiculairement à l'axe d'articulation B, le long de l'axe longitudinal A. Une extrémité proximale 72 du premier bras 62 est configurée pour se déplacer à l'intérieur de cette fente de translation 70. La dimension de la fente de translation 70 est de préférence prédéterminée pour que le point d'articulation soit en butée d'un côté de la fente de translation 70 lorsque le système de pantographe est dans la position rabattue et en butée au niveau de son autre côté lorsque le système de pantographe est dans la position déployée.

Le mécanisme de translation 66 comprend également une bielle 74 articulée par rapport au corps de fixation 46 au niveau d'une extrémité et au premier bras 62 au niveau d'une extrémité opposée. Cette double articulation permet à la bielle 74 de contraindre l'extrémité proximale 72 du premier bras 62 à se déplacer en translation le long de l'axe longitudinal A lors du déplacement du système de pantographe entre les positions rabattue et déployée.

Le système de pantographe comprend de préférence deux mécanismes de bras 60 articulés chacun par rapport à un montant du corps de fixation 46. Les deux mécanismes de bras 60 sont fixés entre eux et s'étendent parallèlement entre eux de manière à décrire la même trajectoire durant le déplacement du système de pantographe entre les positions rabattue et déployée. Le ballon de stockage 14 est ainsi destiné à être fixé à chacun des deux mécanismes de bras 60.

Le système de fixation 36 comprend un premier système de verrouillage 76 du ballon de stockage 14 sur le deuxième bras 62 de manière à maintenir le ballon de stockage 14 fixé au système de pantographe durant son déplacement.

Le système de fixation 36 comprend un deuxième système de verrouillage 75 du ballon de stockage 14 sur le corps de fixation 46, en particulier sur un ou les deux montants, lorsque le système de pantographe est en position rabattue pour verrouiller le ballon de stockage 14 dans une position fonctionnelle.

Le premier bras 62 est de préférence articulé au corps de fixation 46 au niveau d'une portion inférieure du corps de fixation 46. Le deuxième système de verrouillage 75 du ballon de stockage 14 est de préférence disposé au niveau d'une portion supérieure du corps de fixation 46.

## Revendications

1. Dispositif combiné (10) de chauffage de l'eau sanitaire et de l'eau de chauffage d'un local, le dispositif combiné (10) s'étendant le long d'un axe longitudinal (A), ledit dispositif combiné (10) comprenant :
- un ballon de stockage (14) d'eau sanitaire,
- un module hydraulique (15) comprenant un circuit d'eau sanitaire (12) destiné à être en communication de fluide avec le ballon de stockage (14) et un circuit d'eau de chauffage (18), le module hydraulique (15) comprenant en outre au moins un échangeur de chaleur (22, 28) pour transférer de la chaleur à de l'eau de chauffage présente dans le circuit d'eau de chauffage (18),
- un système de fixation (36) pour fixer au-dessus du sol (40) le ballon de stockage (14) et le module hydraulique (15) à un support (38), le système de fixation (36) comprenant un corps de fixation (46) destiné à rester fixe par rapport au support
,ledit dispositif combiné **caractérisé en ce que** le système de fixation comprend au moins un bras de fixation (48) mobile par rapport audit corps de fixation et configuré pour être fixé au ballon de stockage, ledit au moins un bras de fixation (48) étant mobile entre une position déployée dans laquelle le ballon de stockage est posé au sol et une position rabattue dans laquelle le ballon de stockage est disposé contre le support, au-dessus du module hydraulique,
dans lequel le module hydraulique (15) comprend une enveloppe externe (50) ouverte au niveau d'une face de dessus, d'une face arrière et/ou d'une face avant de sorte que ledit au moins un bras de fixation (48) est au moins partiellement disposé dans le module hydraulique (15), au travers de la face de dessus, de la face arrière et/ou de la face avant, lorsque ledit au moins un bras de fixation (48) est en position déployée.

2. Dispositif combiné (10) selon la revendication 1, dans lequel l'enveloppe externe (50) du module hydraulique (15) définit un espace intérieur comprenant une zone frontale, une zone arrière, une zone supérieure, une zone inférieure et deux zones latérales, le circuit d'eau sanitaire (12), le circuit d'eau de chauffage (18) et ledit au moins un échangeur (22, 28) étant disposés dans les zones inférieure et latérales pour permettre aux zones frontale, arrière et supérieure d'être au moins partiellement libres pour recevoir ledit au moins un bras de fixation (48) lorsqu'il est disposé dans la position déployée.

3. Dispositif combiné (10) selon la revendication 2, dans lequel ledit au moins un bras de fixation (48) est configuré pour parcourir lors de son mouvement depuis la première vers la deuxième positions :
- entre 30% et 100% de la zone de dessus le long d'un axe perpendiculaire à l'axe longitudinal (A), de préférence entre 60% et 100% de la zone de dessus, et
- entre 30% et 100% de la zone frontale le long d'un axe parallèle à l'axe longitudinal (A), de préférence entre 60% et 100% de la zone frontale.

4. Dispositif combiné (10) selon la revendication 3, dans lequel ledit au moins un bras de fixation (48) est en outre configuré pour parcourir lors de son mouvement depuis la première vers la deuxième positions entre 0 et 30% de la zone arrière le long d'un axe parallèle à l'axe longitudinal (A).

5. Dispositif combiné (10) selon l'une quelconque des revendications précédentes, dans lequel le module hydraulique (15) comprend une platine de raccordement (34) du circuit d'eau de chauffage à au moins une installation d'eau de chauffage du local et du circuit d'eau sanitaire à une installation d'eau sanitaire du local, ladite platine de raccordement (34) étant fixée sur le système de fixation (36).

6. Dispositif combiné (10) selon l'une quelconque des revendications précédentes, dans lequel ledit au moins un bras de fixation (48) est un système de pantographe permettant, lors d'un déplacement de la position déployée vers la position rabattue, de déplacer le ballon de stockage selon une trajectoire combinant un mouvement de rotation et un mouvement de translation.

7. Dispositif combiné (10) selon la revendication 6, dans lequel le système de pantographe comprend au moins un mécanisme de bras (60) articulés par rapport au corps de fixation (46), ledit au moins un mécanisme de bras (60) articulés comprenant un premier bras (62) articulé par rapport au corps de fixation (46) autour d'un axe d'articulation (B) et un deuxième bras (64) articulé par rapport au premier bras, le deuxième bras comprenant une interface de fixation avec le ballon de stockage.

8. Dispositif combiné (10) selon la revendication 7, dans lequel le premier bras (62) est articulé au corps de fixation (46) au moyen d'un mécanisme de translation (66) permettant à un point d'articulation (68) entre le premier bras et le corps de fixation (46) d'être déplacé en translation le long d'une direction perpendiculaire à l'axe d'articulation (B) pendant le déplacement du système de pantographe entre les positions déployée et rabattue.

9. Dispositif combiné (10) selon la revendication 8, dans lequel le point d'articulation (68) est disposé à une première hauteur lorsque le système de pantographe est disposé dans la position rabattue et à une deuxième hauteur lorsque le système de pantographe est disposé dans la position déployée, la deuxième hauteur étant supérieure à la première hauteur de manière à limiter l'insertion du système de pantographe dans le module hydraulique (15) et à rapprocher le ballon de stockage (14) du module hydraulique (15) lorsque le système de pantographe termine son déplacement vers la position rabattue.

10. Dispositif combiné (10) selon la revendication 8 ou 9, dans lequel le corps de fixation (46) comprend une fente de translation (70) s'étendant perpendiculaire à l'axe d'articulation (B) et dans laquelle une extrémité proximale (72) du premier bras (62) est configurée pour se déplacer, le mécanisme de translation (66) comprenant une bielle (74) articulée par rapport au corps de fixation (46) au niveau d'une extrémité et au premier bras (62) au niveau d'une extrémité opposée de manière à contraindre le déplacement en translation de l'extrémité proximale (72) du premier bras lors de son déplacement entre les positions rabattue et déployée.

11. Dispositif combiné (10) selon l'une quelconque des revendications 7 à 10, dans lequel le corps de fixation (46) comprend deux montants s'étendant parallèlement entre eux le long d'un axe longitudinal (A), le système de pantographe comprenant deux mécanismes de bras (60) articulés chacun par rapport à un montant du corps de fixation, les deux mécanismes de bras (60) étant fixés entre eux et s'étendant parallèlement entre eux, le ballon de stockage étant configuré pour être fixé à chacun des deux mécanismes de bras.

12. Dispositif combiné (10) selon l'une quelconque des revendications précédentes, dans lequel le système de fixation (36) comprend au moins un système de verrouillage (75, 76) du ballon de stockage lorsque ledit au moins un bras de fixation est en position rabattue pour verrouiller le ballon de stockage dans une position fonctionnelle.

13. Dispositif combiné (10) selon l'une quelconque des revendications 6 à 11 en combinaison avec la revendication 12, dans lequel le premier bras (62) est articulé au corps de fixation (46) au niveau d'une portion inférieure du corps de fixation, ledit au moins un système de verrouillage (75, 76) du ballon de stockage étant disposé au niveau d'une portion supérieure du corps de fixation (46).

14. Dispositif combiné (10) selon l'une quelconque des revendications précédentes, dans lequel le système de fixation (36) comprend au moins un pied (42) destiné à être positionné contre le sol (40) pour supporter au moins partiellement le poids du ballon de stockage (14) et du module hydraulique (15).

15. Dispositif combiné (10) selon la revendication 14, dans lequel ledit au moins un pied (42) s'étend au niveau d'une face arrière du système de fixation (36) de manière à maintenir un espace de rangement libre sous le module hydraulique (15).

16. Système de chauffage de l'eau sanitaire et de l'eau de chauffage d'un local comprenant :
- un dispositif combiné (10) selon l'une quelconque des revendications précédentes comprenant en outre une unité extérieure disposée à l'extérieur du local, le ballon de stockage, le système de fixation et le module hydraulique étant disposés dans le local,
- au moins une installation d'eau sanitaire comportant au moins un point de puisage et au moins une installation d'eau de chauffage comprenant au moins un système d'émission de chaleur pour chauffer le local, reliées respectivement au circuit d'eau sanitaire et au circuit d'eau de chauffage du dispositif combiné.

## Patentansprüche

1. Kombinierte Vorrichtung (10) zum Erhitzen von Brauchwasser und von Heizungswasser eines Raums, wobei sich die kombinierte Vorrichtung (10) entlang einer Längsachse (A) erstreckt, wobei die kombinierte Vorrichtung (10) umfasst:
- einen Speicherbehälter (14) für Brauchwasser,
- ein Hydraulikmodul (15), das einen Brauchwasserkreis (12), der dazu bestimmt ist, in Fluidverbindung mit dem Speicherbehälter (14) zu sein, und einen Heizungswasserkreis (18) umfasst, wobei das Hydraulikmodul (15) ferner mindestens einen Wärmetauscher (22, 28) umfasst, um Wärme an im Heizungswasserkreis (18) vorhandenes Heizungswasser zu übertragen,
- ein Befestigungssystem (36), um den Speicherbehälter (14) und das Hydraulikmodul (15) über dem Boden (40) an einer Halterung (38) zu befestigen, wobei das Befestigungssystem (36) einen Befestigungskörper (46) umfasst, der dazu bestimmt ist, in Bezug auf die Halterung feststehend zu bleiben, wobei die kombinierte Vorrichtung **dadurch gekennzeichnet ist, dass** das Befestigungssystem mindestens einen Befestigungsarm (48) umfasst, der in Bezug auf den Befestigungskörper beweglich ist und dazu ausgestaltet ist, an dem Speicherbehälter befestigt zu werden, wobei der mindestens eine Befestigungsarm (48) zwischen einer ausgezogenen Stellung, in welcher der Speicherbehälter auf dem Boden steht, und einer eingezogenen Stellung, in welcher der Speicherbehälter gegen die Halterung, über dem Hydraulikmodul, angeordnet ist, beweglich ist,
wobei das Hydraulikmodul (15) ein Außengehäuse (50) umfasst, das an einer Oberseite, einer Rückseite und/oder einer Vorderseite offen ist, so dass der mindestens eine Befestigungsarm (48) durch die Oberseite, die Rückseite und/oder die Vorderseite hindurch mindestens teilweise in dem Hydraulikmodul (15) angeordnet ist, wenn der mindestens eine Befestigungsarm (48) in der ausgezogenen Stellung ist.

2. Kombinierte Vorrichtung (10) nach Anspruch 1, wobei das Außengehäuse (50) des Hydraulikmoduls (15) einen Innenraum definiert, der einen frontalen Bereich, einen hinteren Bereich, einen oberen Bereich, einen unteren Bereich und zwei seitliche Bereiche umfasst, wobei der Brauchwasserkreis (12), der Heizungswasserkreis (18) und der mindestens eine Tauscher (22, 28) in den unteren und seitlichen Bereichen angeordnet sind, um dem frontalen, hinteren und oberen Bereich zu ermöglichen, mindestens teilweise frei zu sein, um den mindestens einen Befestigungsarm (48) aufzunehmen, wenn er in der ausgezogenen Stellung ist.

3. Kombinierte Vorrichtung (10) nach Anspruch 2, wobei der mindestens eine Befestigungsarm (48) dazu ausgestaltet ist, bei seiner Bewegung von der ersten zu der zweiten Stellung hin zu durchlaufen:
- zwischen 30 % und 100 % des oberen Bereichs entlang einer senkrecht zu der Längsachse (A) verlaufenden Achse, bevorzugt zwischen 60 % und 100 % des oberen Bereichs, und
- zwischen 30 % und 100 % des frontalen Bereichs entlang einer parallel zu der Längsachse (A) verlaufenden Achse, bevorzugt zwischen 60 % und 100 % des frontalen Bereichs.

4. Kombinierte Vorrichtung (10) nach Anspruch 3, wobei der mindestens eine Befestigungsarm (48) ferner dazu ausgestaltet ist, bei seiner Bewegung von der ersten zu der zweiten Stellung hin zwischen 0 und 30 % des hinteren Bereichs entlang einer parallel zu der Längsachse (A) verlaufenden Achse zu durchlaufen.

5. Kombinierte Vorrichtung (10) nach einem der vorhergehenden Ansprüche, wobei das Hydraulikmodul (15) eine Anschlussplatine (34) zum Anschließen des Heizungswasserkreises an mindestens eine Heizungswasserinstallation des Raums und des Brauchwasserkreises an eine Brauchwasserinstallation des Raums umfasst, wobei die Anschlussplatine (34) an dem Befestigungssystem (36) befestigt ist.

6. Kombinierte Vorrichtung (10) nach einem der vorhergehenden Ansprüche, wobei der mindestens eine Befestigungsarm (48) ein Scherensystem ist, das es bei einer Verlagerung von der ausgezogenen Stellung zu der eingezogenen Stellung hin ermöglicht, den Speicherbehälter entlang einer Bahn zu verlagern, die eine Drehbewegung und eine Translationsbewegung kombiniert.

7. Kombinierte Vorrichtung (10) nach Anspruch 6, wobei das Scherensystem mindestens einen Mechanismus (60) aus Armen, die in Bezug auf den Befestigungskörper (46) angelenkt sind, umfasst, wobei der mindestens eine Mechanismus (60) aus angelenkten Armen einen ersten Arm (62), der in Bezug auf den Befestigungskörper (46) um eine Anlenkachse (B) herum angelenkt ist, und einen zweiten Arm (64), der in Bezug auf den ersten Arm angelenkt ist, umfasst, wobei der zweite Arm eine Befestigungsschnittstelle zu dem Speicherbehälter umfasst.

8. Kombinierte Vorrichtung (10) nach Anspruch 7, wobei der erste Arm (62) an den Befestigungskörper (46) mittels eines Translationsmechanismus (66) angelenkt ist, der es einem Anlenkpunkt (68) zwischen dem ersten Arm und dem Befestigungskörper (46) ermöglicht, während der Verlagerung des Scherensystems zwischen der ausgezogenen und der eingezogenen Stellung translatorisch entlang einer senkrecht zu der Anlenkachse (B) verlaufenden Richtung verlagert zu werden.

9. Kombinierte Vorrichtung (10) nach Anspruch 8, wobei der Anlenkpunkt (68) in einer ersten Höhe angeordnet ist, wenn das Scherensystem in der eingezogenen Stellung ist, und in einer zweiten Höhe, wenn das Scherensystem in der ausgezogenen Stellung angeordnet ist, wobei die zweite Höhe über der ersten Höhe liegt, so dass das Einführen des Scherensystems in das Hydraulikmodul (15) begrenzt wird und der Speicherbehälter (14) an das Hydraulikmodul (15) herangeführt ist, wenn das Scherensystem seine Verlagerung zu der eingezogenen Stellung hin beendet.

10. Kombinierte Vorrichtung (10) nach Anspruch 8 oder 9, wobei der Befestigungskörper (46) einen Translationsschlitz (70) umfasst, der sich senkrecht zu der Anlenkachse (B) erstreckt und in dem sich ein proximales Ende (72) des ersten Arms (62) ausgestaltungsgemäß verlagert, wobei der Translationsmechanismus (66) eine Stange (74) umfasst, die in Bezug auf den Befestigungskörper (46) an einem Ende und an dem ersten Arm (62) an einem entgegengesetzten Ende angelenkt ist, so dass die translatorische Verlagerung des proximalen Endes (72) des ersten Arms bei dessen Verlagerung zwischen der eingezogenen und der ausgezogenen Stellung erzwungen wird.

11. Kombinierte Vorrichtung (10) nach einem der Ansprüche 7 bis 10, wobei der Befestigungskörper (46) zwei Träger umfasst, die sich parallel zueinander entlang einer Längsachse (A) erstrecken, wobei das Scherensystem zwei Mechanismen (60) aus Armen umfasst, die jeweils in Bezug auf einen Träger des Befestigungskörpers angelenkt sind, wobei die beiden Mechanismen (60) aus Armen untereinander befestigt sind und sich parallel zueinander erstrecken, wobei der Speicherbehälter dazu ausgestaltet ist, an jedem der beiden Mechanismen aus Armen befestigt zu werden.

12. Kombinierte Vorrichtung (10) nach einem der vorhergehenden Ansprüche, wobei das Befestigungssystem (36) mindestens ein Verriegelungssystemen (75, 76) zum Verriegeln des Speicherbehälters, wenn der mindestens eine Befestigungsarm in der eingezogenen Stellung ist, umfasst, um den Speicherbehälter in einer Funktionsstellung zu verriegeln.

13. Kombinierte Vorrichtung (10) nach einem der Ansprüche 6 bis 11 in Verbindung mit Anspruch 12, wobei der erste Arm (62) an dem Befestigungskörper (46) an einem unteren Abschnitt des Befestigungskörpers angelenkt ist, wobei das mindestens eine Verriegelungssystem (75, 76) zum Verriegeln des Speicherbehälters an einem oberen Abschnitt des Befestigungskörpers (46) angeordnet ist.

14. Kombinierte Vorrichtung (10) nach einem der vorhergehenden Ansprüche, wobei das Befestigungssystem (36) mindestens einen Fuß (42) umfasst, der dazu bestimmt ist, gegen den Boden (40) positioniert zu werden, um das Gewicht des Speicherbehälter (14) und des Hydraulikmoduls (15) mindestens teilweise zu tragen.

15. Kombinierte Vorrichtung (10) nach Anspruch 14, wobei sich der mindestens eine Fuß (42) an einer Rückseite des Befestigungssystems (36) erstreckt, so dass ein freier Stauraum unter dem Hydraulikmodul (15) beibehalten wird.

16. System zum Erhitzen von Brauchwasser und von Heizungswasser eines Raums, umfassend:
- eine kombinierte Vorrichtung (10) nach einem der vorhergehenden Ansprüche, umfassend ferner eine Außeneinheit, die außerhalb des Raums angeordnet ist, wobei der Speicherbehälter, das Befestigungssystem und das Hydraulikmodul in dem Raum angeordnet sind,
- mindestens eine Brauchwasserinstallation, die mindestens eine Zapfstelle aufweist, und mindestens eine Heizungswasserinstallation, die mindestens ein Wärmeabgabesystem zum Heizen des Raums umfasst, die mit dem Brauchwasserkreis beziehungsweise mit dem Heizungswasserkreis der kombinierten Vorrichtung verbunden sind.

## Claims

1. Combined device (10) for heating domestic water and heating water in a premises, the combined device (10) extending along a longitudinal axis (A), said combined device (10) comprising:
- a storage tank (14) for domestic water,
- a hydraulic module (15) comprising a domestic water circuit (12) intended to be in fluidic communication with the storage tank (14) and a heating water circuit (18), the hydraulic module (15) further comprising at least one heat exchanger (22, 28) for transferring heat to heating water in the heating water circuit (18),
- a fastening system (36) for fastening the storage tank (14) and the hydraulic module (15) above the ground (40) to a support (38), the fastening system (36) comprising a fastening body (46) intended to remain stationary with respect to the support, said combined device being **characterized in that** the fastening system comprises at least one fastening arm (48) that is moveable with respect to said fastening body and configured to be fastened to the storage tank, said at least one fastening arm (48) being moveable between a deployed position wherein the storage tank is placed on the ground and a stowed position in which the storage tank is arranged against the support, above the hydraulic module,
wherein the hydraulic module (15) comprises an outer shell (50) that is open at a top face, a rear face and/or a front face such that said at least one fastening arm (48) is at least partially arranged in the hydraulic module (15), through the top face, the rear face and/or the front face, when said at least one fastening arm (48) is in the deployed position.

2. Combined device (10) according to Claim 1, wherein the outer shell (50) of the hydraulic module (15) defines an interior space comprising a front zone, a rear zone, an upper zone, a lower zone and two lateral zones, the domestic water circuit (12), the heating water circuit (18) and said at least one exchanger (22, 28) being arranged in the lower and lateral zones in order to allow the front, rear and upper zones to be at least partially free to receive said at least one fastening arm (48) when it is arranged in the deployed position.

3. Combined device (10) according to Claim 2, wherein said at least one fastening arm (48) is configured to travel through, when it is moving from the first position to the second position:
- between 30% and 100% of the top zone along an axis perpendicular to the longitudinal axis (A), preferably between 60% and 100% of the top zone, and
- between 30% and 100% of the front zone along an axis parallel to the longitudinal axis (A), preferably between 60% and 100% of the front zone.

4. Combined device (10) according to Claim 3, wherein said at least one fastening arm (48) is further configured to travel through, when it is moving from the first position to the second position, between 0% and 30% of the rear zone along an axis parallel to the longitudinal axis (A).

5. Combined device (10) according to any one of the preceding claims, wherein the hydraulic module (15) comprises a connection plate (34) for connecting the heating water circuit to at least one heating water installation in the premises and for connecting the domestic water circuit to a domestic water installation in the premises, said connection plate (34) being fastened to the fastening system (36).

6. Combined device (10) according to any one of the preceding claims, wherein said at least one fastening arm (48) is a pantograph system used, when moved from the deployed position to the stowed position, to move the storage tank along a trajectory combining a rotational movement and a translational movement.

7. Combined device (10) according to Claim 6, wherein the pantograph system comprises at least one mechanism (60) comprising arms that are articulated with respect to the fastening body (46), said at least one articulated-arm mechanism (60) comprising a first arm (62) articulated with respect to the fastening body (46) about an articulation axis (B) and a second arm (64) articulated with respect to the first arm, the second arm comprising a fastening interface with the storage tank.

8. Combined device (10) according to Claim 7, wherein the first arm (62) is articulated with the fastening body (46) by means of a translation mechanism (66) allowing an articulation point (68) between the first arm and the fastening body (46) to be moved in translation in a direction perpendicular to the articulation axis (B) when the pantograph system is being moved between the deployed position and the stowed position.

9. Combined device (10) according to Claim 8, wherein the articulation point (68) is arranged at a first height when the pantograph system is arranged in the stowed position and at a second height when the pantograph system is arranged in the deployed position, the second height being greater than the first height so as to limit the insertion of the pantograph system into the hydraulic module (15) and to move the storage tank (14) closer to the hydraulic module (15) when the pantograph system has finished moving towards the stowed position.

10. Combined device (10) according to Claim 8 or 9, wherein the fastening body (46) comprises a translation slot (70) that extends perpendicular to the articulation axis (B) and in which a proximal end (72) of the first arm (62) is configured to move, the translation mechanism (66) comprising a connecting rod (74) that is articulated with respect to the fastening body (46) at one end and to the first arm (62) at an opposite end, so as to constrain the translational movement of the proximal end (72) of the first arm when it is moving between the stowed position and the deployed position.

11. Combined device (10) according to any one of Claims 7 to 10, wherein the fastening body (46) comprises two uprights extending parallel to one another along a longitudinal axis (A), the pantograph system comprising two arm mechanisms (60) each articulated with respect to an upright of the fastening body, the two arm mechanisms (60) being fastened to one another and extending parallel to one another, the storage tank being configured to be fastened to each of the two arm mechanisms.

12. Combined device (10) according to any one of the preceding claims, wherein the fastening system (36) comprises at least one locking system (75, 76) for the storage tank when said at least one fastening arm is in the stowed position in order to lock the storage tank in an operational position.

13. Combined device (10) according to any one of Claims 6 to 11 in combination with Claim 12, wherein the first arm (62) is articulated with the fastening body (46) at a lower portion of the fastening body, said at least one locking system (75, 76) for the storage tank being arranged in an upper portion of the fastening body (46).

14. Combined device (10) according to any one of the preceding claims, wherein the fastening system (36) comprises at least one stand (42) intended to be positioned on the ground (40) to at least partially support the weight of the storage tank (14) and of the hydraulic module (15).

15. Combined device (10) according to Claim 14, wherein said at least one stand (42) extends along a rear face of the fastening system (36) so as to leave a free storage space under the hydraulic module (15).

16. System for heating domestic water and heating water in a premises comprising:
- a combined device (10) according to any one of the preceding claims, further comprising an outdoor unit arranged outside the premises, the storage tank, the fastening system and the hydraulic module being arranged in the premises,
- at least one domestic water installation including at least one draw-off point and at least one heating water installation comprising at least one heat-emitting system for heating the premises, which are connected respectively to the domestic water circuit and to the heating water circuit of the combined device.
